# EUROPEAN PATENT APPLICATION

(11) **EP 4 029 383 A1**
(43) Date of publication of application: **20.07.2022**
(21) Application number: 20862234.0
(22) Date of filing: 03.04.2020
(51) Int. Cl.: A23L 2/00, A23L 2/52, A23L 2/54, A23L 2/68

(54) **CARBONATED BEVERAGE, METHOD FOR PRODUCING SAME, AND METHOD FOR IMPROVING COOLING SENSATION OF CARBONATED BEVERAGE**

(30) Priority: 13.09.2019 JP 2019167505
(71) Applicant: Suntory Holdings Limited, Osaka 530-8203 (JP)
(72) Inventor: YOSHII, Takaaki, Soraku-gun, Kyoto 619-0284 (JP); HATA, Yuto, Soraku-gun, Kyoto 619-0284 (JP); NAKAHARA, Koichi, Soraku-gun, Kyoto 619-0284 (JP); UEMURA, Masahide, Soraku-gun, Kyoto 619-0284 (JP)
(74) Representative: Vossius & Partner Patentanwälte Rechtsanwälte mbB
(86) International application number: PCT/JP2020/015376
(87) International publication number: WO 2021/049074

(57) **Abstract**

The present invention aims to provide a carbonated beverage that provides a good cooling sensation at the time of drinking, a production method thereof, and a method of improving cooling sensation of a carbonated beverage. The present invention relates to, for example, a carbonated beverage containing ethyl glycoside and at least one of citric acid or its salt, wherein a citric acid equivalent total concentration of the at least one of citric acid or its salt is 50 ppm or more, a ratio (B)/(A) of an ethyl glycoside concentration (B) to the citric acid equivalent total concentration (A) of the at least one of citric acid or its salt is 0.0003 to 200, and an ethanol concentration is less than 0.5 v/v%.

## Description

### TECHNICAL FIELD

The present invention relates to carbonated beverages and a production method thereof. The present invention also relates to a method of improving cooling sensation of carbonated beverages.

### BACKGROUND ART

Carbonated beverages provide a carbonated sensation at the time of drinking. The carbonated sensation is peculiar to these beverages and uncommon among other refreshing beverages. The carbonated sensation of carbonated beverages is generated, for example, by stimulation induced by carbon dioxide gas dissolved in carbonated beverages as the carbon dioxide gas bubbles in the oral cavity and/or throat. Such stimulation provides a cooling sensation.

In order to enhance the carbon dioxide gas-induced stimulation that provides cooling sensation peculiar to carbonated beverages, methods such as increasing the carbon dioxide gas pressure and adding a substance that enhances the stimulation have been studied. For example, according to Patent Literature 1, stimulation to the throat caused by carbon dioxide gas at the time of drinking feels strong when a carbonated beverage is blended with an emulsified composition containing a sensory stimulant, an emulsifier, water, and optionally an oily substance, wherein an average particle diameter of emulsion particles is 500 nm or less. The sensory stimulant disclosed in Patent Literature 1 is a substance that acts on the tongue and oral mucosa to stimulate the thermal sensation and the pain sensation. Patent Literature 1 describes spilanthol, ginger extract, and the like, which are pungency ingredients, as examples of the sensory stimulant.

### CITATION LIST

### - Patent Literature

Patent Literature 1: WO 2015/156244

### SUMMARY OF INVENTION

### - Technical Problem

The carbon dioxide gas-induced stimulation at the time of drinking of carbonated beverages can be enhanced by pungency ingredients as described above. The carbon dioxide gas-induced stimulation tends to feel strong also when bubbles of carbon dioxide gas feel large at the time of drinking of carbonated beverages. Meanwhile, preference to stimulation of carbonated beverages varies among people, and strong carbon dioxide gas-induced stimulation causes sensation of slight pain in the oral cavity and/or throat, which makes many people feel difficult to drink carbonated beverages with strong carbon dioxide gas-induced stimulation. As described above, the carbonated sensation of carbonated beverages is generated, for example, by stimulation induced by carbon dioxide gas as it bubbles in the oral cavity or the like. A good cooling sensation is achieved, for example, when bubbles of the carbon dioxide gas feel fine at the time of drinking.

The present invention aims to provide a carbonated beverage that provides a good cooling sensation at the time of drinking and a production method of the carbonated beverage. The present invention also aims to provide a method of improving cooling sensation of a carbonated beverage.

### - Solution to Problem

As a result of extensive studies to solve the above issues, the present inventors found that adding ethyl glycoside and at least one of citric acid or its salt to a carbonated beverage results in a better (improved) cooling sensation of the carbonated beverage.

Specifically, the present invention relates to a carbonated beverage, a method of producing a carbonated beverage, and a method of improving cooling sensation of a carbonated beverage described below.
(1) A carbonated beverage containing: ethyl glycoside; and at least one of citric acid or its salt, wherein a citric acid equivalent total concentration of the at least one of citric acid or its salt is 50 ppm or more, a ratio (B)/(A) of an ethyl glycoside concentration (B) to the citric acid equivalent total concentration (A) of the at least one of citric acid or its salt is 0.0003 to 200, and an ethanol concentration is less than 0.5 v/v%.
(2) The carbonated beverage according to (1) above, wherein the citric acid equivalent total concentration of the at least one of citric acid or its salt is 50 to 8000 ppm.
(3) The carbonated beverage according to (1) or (2) above, wherein the ethyl glycoside concentration is 2.5 to 10000 ppm.
(4) The carbonated beverage according to any one of (1) to (3) above, wherein the ethyl glycoside is ethyl glucoside.
(5) A method of producing a carbonated beverage having an ethanol concentration of less than 0.5 v/v%, including: adding ethyl glycoside and at least one of citric acid or its salt to a beverage such that, in the beverage, a citric acid equivalent total concentration of the at least one of citric acid or its salt is 50 ppm or more, and a ratio (B)/(A) of an ethyl glycoside concentration (B) to the citric acid equivalent total concentration (A) of the at least one of citric acid or its salt is 0.0003 to 200.
(6) A method of improving cooling sensation of a carbonated beverage having an ethanol concentration of less than 0.5 v/v%, including: adding ethyl glycoside and at least one of citric acid or its salt to a beverage such that, in the beverage, a citric acid equivalent total concentration of the at least one of citric acid or its salt is 50 ppm or more, and a ratio (B)/(A) of an ethyl glycoside concentration (B) to the citric acid equivalent total concentration (A) of the at least one of citric acid or its salt is 0.0003 to 200.

### - Advantageous Effects of Invention

The present invention can provide a carbonated beverage that provides a good cooling sensation at the time of drinking and a production method of the carbonated beverage. The present invention can also provide a method of improving cooling sensation of a carbonated beverage. The present invention can improve the cooling sensation of a carbonated beverage.

### DESCRIPTION OF EMBODIMENTS

### <Carbonated beverage>

The carbonated beverage of the present invention contains ethyl glycoside and at least one of citric acid or its salt. The citric acid equivalent total concentration of the at least one of citric acid or its salt is 50 ppm or more. The ratio ((B)/(A)) of an ethyl glycoside concentration (B) to the citric acid equivalent total concentration (A) of the at least one of citric acid or its salt is 0.0003 to 200. The ethanol concentration is less than 0.5 v/v%.

When the citric acid equivalent total concentration of the at least one of citric acid or its salt is 50 ppm or more and the ratio ((B)/(A)) of the ethyl glycoside concentration (B) to the citric acid equivalent total concentration (A) of the at least one of citric acid or its salt is in the above range in the carbonated beverage having an ethanol concentration of less than 0.5 v/v%, bubbles of carbon dioxide gas feel fine at the time of drinking. The amount of bubble particles of the carbon dioxide gas also feels large at the time of drinking. As a result of these sensations achieved at the time of drinking of the carbonated beverage, a good cooling sensation can be achieved. The carbonated beverage is also easily drinkable when bubbles of the carbon dioxide gas feel fine at the time of drinking. The cooling sensation refers to a refreshing stimulating sensation resulting from a sensation caused by bubbling of carbon dioxide gas in the oral cavity and the like (sometimes such a sensation may be expressed as a fizzy sensation).

The carbonated beverage of the present invention has an ethanol concentration of 0.0 v/v% or more and less than 0.5 v/v%.

The ethanol concentration in the carbonated beverage of the present invention is preferably 0.4 v/v% or less, more preferably 0.3 v/v% or less. The ethanol concentration can be measured by gas chromatography.

The carbonated beverage is a beverage containing carbon dioxide gas. The carbonated beverage of the present invention contains carbon dioxide gas, ethyl glycoside, and at least one of citric acid or its salt. Preferably, the carbonated beverage is a beverage with carbon dioxide gas injected under pressure. The carbonated beverage is not limited. Examples include carbonated water, carbonated beverages with a fruit juice, carbonated beverages without a fruit juice, carbonated beverages with milk, and energy drinks. The carbonated beverage may be an alcohol-like beverage (non-alcoholic beverage).

The carbonated beverage of the present invention contains at least one of citric acid or its salt, preferably citric acid. Any salt of citric acid may be used as long as it is usable in beverages. Examples of such a salt include sodium salt, potassium salt, calcium salt, magnesium salt, aluminum salt and zinc salt.

In the carbonated beverage of the present invention, the concentration of the at least one of citric acid or its salt in terms of citric acid equivalent total concentration (citric acid equivalent concentration of the sum of citric acid and its salt) is 50 ppm or more, preferably 100 ppm or more, more preferably 200 ppm or more, still more preferably 500 ppm or more, and is preferably 8000 ppm or less, more preferably 6000 ppm or less, still more preferably 5500 ppm or less. When the citric acid equivalent total concentration of the at least one of citric acid or its salt is in the above ranges, the resulting carbonated beverage has an improved cooling sensation owing to the ethyl glycoside. In one embodiment, the citric acid equivalent total concentration of the at least one of citric acid or its salt is preferably 50 to 8000 ppm, more preferably 100 to 8000 ppm, still more preferably 200 to 8000 ppm, yet still more preferably 500 to 6000 ppm, particularly preferably 500 to 5500 ppm. In one embodiment, the citric acid equivalent total concentration of the at least one of citric acid or its salt is also preferably 100 to 1000 ppm. In another embodiment, the citric acid equivalent total concentration of the at least one of citric acid or its salt may be 500 to 8000 ppm, 3000 to 8000 ppm, or 5000 to 8000 ppm.

The citric acid equivalent total concentration of the at least one of citric acid or its salt is the citric acid equivalent concentration of the sum of citric acid and its salt in the carbonated beverage. For example, when the at least one of citric acid or its salt in the carbonated beverage is citric acid, the citric acid equivalent total concentration (A) of the at least one of citric acid or its salt is the citric acid concentration.

The citric acid equivalent total concentration of the at least one of citric acid or its salt can be measured by a known method using high performance liquid chromatography. Measurement conditions and the like may be the same as conditions and the like described in Examples, for example.

In the present invention, the origin of the at least one of citric acid or its salt is not limited. The at least one of citric acid or its salt may be naturally derived (e.g., fruit juices) or synthetic. In one embodiment, a material such as a fruit juice containing at least one of citric acid or its salt may be used to add the at least one of citric acid or its salt to a carbonated beverage.

Any fruit juice containing at least one of citric acid or its salt may be used as long as it is usable in beverages. Examples include juices of citrus fruits (e.g., lemon, orange, satsuma mandarin, lime, and grapefruit), grapes (e.g., Kyoho grape), Japanese apricot, blackcurrant, strawberry, blueberry, pineapple, kiwifruit, peach, apricot, and apple. The carbonated beverage may contain one or more of these fruit juices.

The carbonated beverage of the present invention contains ethyl glycoside. In the carbonated beverage of the present invention, the ratio ((B)/(A)) of the ethyl glycoside concentration (B) to the citric acid equivalent total concentration (A) of the at least one of citric acid or its salt is 0.0003 to 200. In the carbonated beverage, when the citric acid equivalent total concentration (A) of the at least one of citric acid or its salt is 50 ppm or more and the ratio ((B)/(A)) of the ethyl glycoside concentration (B) to the citric acid equivalent total concentration (A) of the at least one of citric acid or its salt is in the above range, the resulting carbonated beverage can provide a good cooling sensation at the time of drinking.

In one embodiment, the ratio ((B)/(A)) of the ethyl glycoside concentration (B) to the citric acid equivalent total concentration (A) of the at least one of citric acid or its salt in the carbonated beverage may be, for example, 0.0006 to 200, 0.0013 to 200, 0.00625 to 200, 0.0125 to 200, or 0.125 to 200. For example, the ratio ((B)/(A)) may be 0.0003 to 20.

For example, the ratio ((B)/(A)) in the carbonated beverage may be 0.0003 to 100, 0.0006 to 100, 0.0013 to 100, 0.00625 to 100, or 0.0125 to 100.

In another embodiment, for example, the ratio ((B)/(A)) in the carbonated beverage may be 0.0003 to 2, 0.0003 to 1, 0.0003 to 0.4, 0.0003 to 0.2, 0.0006 to 0.2, or 0.0006 to 0.1. The ratio ((B)/(A)) may be 0.0003 to 0.1.

Ethyl glycoside is a compound having a structure in which a hydroxy group attached to the carbon atom at position 1 of a reducing sugar is replaced by an ethoxy group. A preferred reducing sugar to form ethyl glycoside is a monosaccharide, such as glucose, fructose, galactose, mannose, or xylose. The reducing sugar may be in the D form, L form, or DL form. The D form is preferred.

Examples of the ethyl glycoside include ethyl glucoside, ethyl fructoside, ethyl galactoside, ethyl mannoside, and ethyl xyloside. The ethyl glycoside may be of one type or a combination of two or more types. In particular, the ethyl glycoside is preferably ethyl glucoside. The ethyl glucoside may be either ethyl-*α-*glucoside or ethyl-*β*-glucoside, or may be a combination of ethyl-*α*-glucoside and ethyl-*β*-glucoside. The ethyl glycoside is preferably ethyl-*α*-glucoside, more preferably ethyl-*α*-D-glucoside.

In one embodiment of the present invention, the ethyl glycoside concentration in the carbonated beverage is preferably 2.5 ppm or more, more preferably 5 ppm or more, preferably 50 ppm or more, more preferably 100 ppm or more, still more preferably 1000 ppm or more, and is preferably 10000 ppm or less. The ethyl glycoside in the above concentration ranges in the carbonated beverage of the present invention further improves the cooling sensation of the carbonated beverage. In one embodiment, in order to improve the cooling sensation, the ethyl glycoside concentration in the carbonated beverage is preferably 2.5 to 10000 ppm, more preferably 5 to 10000 ppm, preferably 50 to 10000 ppm, more preferably 100 to 10000 ppm, still more preferably 1000 to 10000 ppm.

In another embodiment, the ethyl glycoside concentration in the carbonated beverage is preferably 100 ppm or less, more preferably 20 ppm or less, still more preferably 10 ppm or less. In the carbonated beverage of the present invention, when the ethyl glycoside concentration is 100 ppm or less, advantageously, the cooling sensation of the carbonated beverage can be improved by the ethyl glycoside without affecting the aroma of the beverage. In one embodiment, in order to improve the cooling sensation without affecting the aroma of the carbonated beverage, the ethyl glycoside concentration in the carbonated beverage is preferably 2.5 to 100 ppm, more preferably 2.5 to 20 ppm, still more preferably 2.5 to 10 ppm, particularly preferably 5 to 10 ppm.

The ethyl glycoside concentration refers to the total ethyl glycoside concentration.

Herein, the term "ppm" refers to the ppm by weight/volume (w/v).

The ethyl glycoside concentration in the carbonated beverage can be measured by a known method using high performance liquid chromatography (HPLC).

The ethyl glycoside may be produced by any method. For example, the ethyl glycoside can be obtained by reacting a reducing sugar with ethanol. For example, the ethyl glucoside can be obtained by reacting glucose with ethanol.

In one embodiment, in order to improve the cooling sensation, preferred ranges of the citric acid equivalent total concentration of the at least one of citric acid or its salt and the ethyl glycoside concentration in the carbonated beverage are as described below.

When the citric acid equivalent total concentration of the at least one of citric acid or its salt is 50 ppm or more and less than 100 ppm, the ethyl glycoside concentration is 2.5 to 10000 ppm (preferably 100 to 10000 ppm, more preferably 1000 to 10000 ppm).

When the citric acid equivalent total concentration of the at least one of citric acid or its salt is 100 ppm or more and less than 500 ppm, the ethyl glycoside concentration is 2.5 to 10000 ppm (preferably 5 to 10000 ppm, more preferably 100 to 10000 ppm, still more preferably 1000 to 10000 ppm).

When the citric acid equivalent total concentration of the at least one of citric acid or its salt is 500 ppm or more and less than 1000 ppm, the ethyl glycoside concentration is 2.5 to 10000 ppm (preferably 10 to 10000 ppm, more preferably 100 to 10000 ppm, still more preferably 1000 to 10000 ppm).

When the citric acid equivalent total concentration of the at least one of citric acid or its salt is 1000 ppm or more and less than 5000 ppm, the ethyl glycoside concentration is 2.5 to 10000 ppm (preferably 5 to 10000 ppm, more preferably 100 to 10000 ppm, still more preferably 1000 to 10000 ppm).

When the citric acid equivalent total concentration of the at least one of citric acid or its salt is 5000 to 8000 ppm, the ethyl glycoside concentration is 2.5 to 10000 ppm (preferably 100 to 10000 ppm, more preferably 1000 to 10000 ppm, still more preferably 5000 to 10000 ppm).

The at least one of citric acid or its salt and the ethyl glycoside in the above concentration ranges in the carbonated beverage further improve the cooling sensation of the carbonated beverage.

In another embodiment, the citric acid equivalent total concentration of the at least one of citric acid or its salt in the carbonated beverage is preferably 50 to 8000 ppm, and the ethyl glycoside concentration is preferably 2.5 to 100 ppm. In this case, the ethyl glycoside concentration in the carbonated beverage is more preferably 2.5 to 20 ppm, still more preferably 2.5 to 10 ppm, particularly preferably 5 to 10 ppm. When the ethyl glycoside concentration in the carbonated beverage is in the above ranges, advantageously, it is possible to improve the cooling sensation of the carbonated beverage by the ethyl glycoside without affecting the aroma of the beverage.

The carbonated beverage of the present invention has a gas pressure at 25°C of preferably 1.0 to 5.0 kgf/cm², more preferably 3.0 to 4.5 kgf/cm², still more preferably 3.5 to 4.2 kgf/cm². When the carbon dioxide gas pressure is in the above ranges, the effect of the present invention can be more sufficiently achieved. The carbon dioxide gas pressure of the carbonated beverage can be measured using a commercially available gas pressure measuring device (e.g., gas volume analyzer "GVA-500A" available from Kyoto Electronics Manufacturing Co., Ltd.). The measurement can be performed at a liquid temperature of 25°C.

The carbonated beverage of the present invention may contain a component in addition to the ethyl glycoside and the at least one of citric acid or its salt, as long as the effect of the present invention is not impaired. Examples of the component include additives such as fragrances, vitamins, pigments, antioxidants, acidulants, emulsifiers, preservatives, seasonings, extracts, pH regulators, and quality stabilizers. The carbonated beverage may contain one or more of these additives. The carbonated beverage of the present invention may contain any of the fruit juices described above and the like. The carbonated beverage of the present invention contains water. The carbonated beverage of the present invention is usually a liquid composition containing water as a base. The water content is preferably 90 wt% or more, more preferably 90 to 99.99 wt%, still more preferably 95 to 99.9 wt%.

In the present invention, the carbonated beverage may be in any form, and can be provided as a packaged beverage. In one embodiment, preferably, the beverage is a packaged beverage. The form of the package is not limited. A hermetic package such as a bottle (e.g., a glass bottle), can, resin bottle (e.g., plastic bottle), aluminum pouch, or plastic pouch may be filled with the beverage so as to provide a packaged beverage or the like. In the present invention, the package is preferably a glass bottle or plastic bottle, and the present invention can be provided as a carbonated beverage packaged in a glass bottle or a carbonated beverage packaged in a plastic bottle.

### <Method of producing carbonated beverage>

The present invention also encompasses the following method of producing a carbonated beverage:
a method of producing a carbonated beverage having an ethanol concentration of less than 0.5 v/v%, including: adding ethyl glycoside and at least one of citric acid or its salt to a beverage such that, in the beverage, a citric acid equivalent total concentration of the at least one of citric acid or its salt is 50 ppm or more, and a ratio ((B)/(A)) of an ethyl glycoside concentration (B) to the citric acid equivalent total concentration (A) of the at least one of citric acid or its salt is 0.0003 to 200.

### <Method of improving cooling sensation of carbonated beverage>

The following method of improving cooling sensation of a carbonated beverage is also encompassed by the present invention:
a method of improving cooling sensation of a carbonated beverage having an ethanol concentration of less than 0.5 v/v%, including adding ethyl glycoside and at least one of citric acid or its salt to a beverage such that, in the beverage, the citric acid equivalent total concentration of the at least one of citric acid or its salt is 50 ppm or more, and a ratio ((B)/(A)) of an ethyl glycoside concentration (B) to the citric acid equivalent total concentration (A) of the at least one of citric acid or its salt is 0.0003 to 200.

Adding ethyl glycoside and at least one of citric acid or its salt at the concentrations and ratio described above to a carbonated beverage having an ethanol concentration of less than 0.5 v/v% can improve the cooling sensation of the carbonated beverage, as compared to not adding glycoside, citric acid, or its salt. Ethyl glycoside and at least one of citric acid or its salt can be used to improve the cooling sensation of a carbonated beverage having an ethanol concentration or less than 0.5 v/v%. The production method of the present invention can produce a carbonated beverage that provides a good cooling sensation at the time of drinking.

In the method of producing a carbonated beverage and the method of improving cooling sensation, the ethyl glycoside and the at least one of citric acid or its salt, their concentrations, and their preferred embodiments are the same as those of the carbonated beverage described above. Preferred embodiments of the carbonated beverage are the same as those of the carbonated beverage described above.

The method and order of adding ethyl glycoside and at least one of citric acid or citrate are not limited. The method of producing a carbonated beverage and the method of improving cooling sensation only require that the resulting carbonated beverage having an ethanol concentration of less than 0.5 v/v% contains ethyl glycoside and at least one of citric acid or its salt at the concentrations and ratio described above. For example, necessary amounts of these components may be mixed with water or carbonated water to provide a beverage containing ethyl glycoside and at least one of citric acid or its salt. The production method and the method of improving cooling sensation may each include adding carbon dioxide gas to the beverage. The adding ethyl glycoside and at least one of citric acid or its salt to a beverage and the adding carbon dioxide gas to the beverage are not necessarily performed separately and may be performed simultaneously. The adding ethyl glycoside and at least one of citric acid or its salt may be performed before, after, or simultaneously with the adding carbon dioxide gas to the beverage. Carbon dioxide gas can be added to the beverage by a known method. The method of producing a carbonated beverage and the method of improving cooling sensation each may include filling a package with the carbonated beverage.

A second carbonated beverage of the present invention is a carbonated beverage containing ethyl glycoside and at least one of citric acid or its salt, wherein a citric acid equivalent total concentration of the at least one of citric acid or its salt is 10 ppm or more and less than 50 ppm, an ethyl glycoside concentration is 100 ppm or more, and an ethanol concentration is less than 0.5 v/v%.

In a carbonated beverage having an ethanol concentration of less than 0.5 v/v%, setting the ethyl glycoside concentration to 100 ppm or more when the citric acid equivalent total concentration (A) of the at least one of citric acid or its salt is less than 50 ppm can improve the cooling sensation of the beverage at the time of drinking.

In the second carbonated beverage of the present invention, preferred embodiments of the ethyl glycoside and the at least one of citric acid or its salt are the same as those of the carbonated beverage described above. In order to improve the cooling sensation, the second carbonated beverage of the present invention has an ethyl glycoside concentration of preferably 100 to 10000 ppm, more preferably 1000 to 10000 ppm.

### EXAMPLES

The following provides examples that more specifically describe the present invention. The present invention is not limited to these examples.

In Examples, ethyl glycoside was ethyl-*α*-D-glucoside (hereinafter, "EG").

### (Example 1)

Citric acid and EG were dissolved in commercially available carbonated water (gas pressure at 25°C: 3.8 to 4.0 kgf/cm²; ethanol concentration: 0 v/v%) to prepare samples (carbonated beverages). Hereinafter, the commercially available carbonated water used for tests is referred to as "carbonated water A". The carbonated water A is sugar free carbonated water. In the carbonated water A, the ethyl glycoside concentration and the concentration of the citric acid and its salt were both 0 ppm.

The samples were prepared by varying the concentration of citric acid to be added to the carbonated water A in nine levels of 0 ppm, 10 ppm, 50 ppm, 100 ppm, 500 ppm, 1000 ppm, 5000 ppm, and 8000 ppm, and by varying the concentration of EG in eight levels of 0 ppm, 2.5 ppm, 5 ppm, 10 ppm, 100 ppm, 1000 ppm, 5000 ppm, and 10000 ppm.

Two panelists A and B experienced in sensory evaluation performed sensory evaluation on the cooling sensation of each sample. In the sensory evaluation, each panelist tasted the sample (10 mL) in the mouth for ten seconds, spit out the sample, and evaluated the cooling sensation (refreshing stimulating sensation). When evaluating a different sample, each panelist rinsed the mouth with water until the taste in the mouth disappeared. The cooling sensation of each sample was evaluated based on the following criteria in seven levels by giving 1 to 4 points with 0.5 increments with the score of the cooling sensation of non-carbonated water being 1 point and the score of the cooling sensation of the carbonated water A being 2 points. Then, the scores given by the panelists were averaged. A sample whose average score is higher by at least 0.5 points than that of the sample having a citric acid concentration of 0 ppm and an EG concentration of 0 ppm (the carbonated water A with no addition of citric acid and EG) was rated as having an improved cooling sensation.

### Evaluation criteria for cooling sensation

1: No refreshing stimulating sensation is felt.
2: A refreshing stimulating sensation is slightly felt.
3: A refreshing stimulating sensation is felt.
4: A refreshing stimulating sensation is strongly felt.

Table 1 shows the weight ratio (EG/citric acid) of ethyl glycoside (EG) to citric acid in each sample.

Tables 2 and 3 show the results of the sensory evaluation of each sample. Table 2 shows the results of the sensory evaluation by the panelists on the samples (scores of the cooling sensation), and Table 3 shows the average scores of the cooling sensation.

Table 4 shows the degree of improvement in the cooling sensation achieved by addition of EG and citric acid, which was calculated from the results shown in Table 3. The degree of improvement shown in Table 4 is indicated by a value of X1 minus 2.00 (X1 - 2.00), where X1 is the score of a sample containing at least one of citric acid or EG shown in Table 3 and 2.00 is the score of a sample having a citric acid concentration of 0 ppm and an EG concentration of 0 ppm (the carbonated water A with no addition of citric acid and EG).

**[Table 1]**

| EG/Citric acid | | Citric acid (ppm) | | | | | | | |
|---|---|---|---|---|---|---|---|---|---|
| | | 0 | 10 | 50 | 100 | 500 | 1000 | 5000 | 8000 |
| EG (ppm) | 0 | - | 0 | 0 | 0 | 0 | 0 | 0 | 0 |
| | 2.5 | - | 0.25 | 0.05 | 0.025 | 0.005 | 0.0025 | 0.0005 | 0.0003 |
| | 5 | - | 0.5 | 0.1 | 0.05 | 0.01 | 0.005 | 0.001 | 0.0006 |
| | 10 | - | 1 | 0.2 | 0.1 | 0.02 | 0.01 | 0.002 | 0.0013 |
| | 100 | - | 10 | 2 | 1 | 0.2 | 0.1 | 0.02 | 0.0125 |
| | 1000 | - | 100 | 20 | 10 | 2 | 1 | 0.2 | 0.125 |
| | 5000 | - | 500 | 100 | 50 | 10 | 5 | 1 | 0.625 |
| | 10000 | - | 1000 | 200 | 100 | 20 | 10 | 2 | 1.25 |

**[Table 2]**

| | | Citric acid (ppm) | | | | | | | |
|---|---|---|---|---|---|---|---|---|---|
| | | 0 | | 10 | | 50 | | 100 | |
| Panelist | | A | B | A | B | A | B | A | B |
| EG (ppm) | 0 | 2 | 2 | 2 | 2 | 2 | 2 | 2 | 2 |
| | 2.5 | 2 | 2 | 2 | 2 | 2.5 | 2.5 | 2.5 | 2.5 |
| | 5 | 2 | 2 | 2 | 2 | 2.5 | 2.5 | 2.5 | 3 |
| | 10 | 2 | 2 | 2 | 2.5 | 2.5 | 2.5 | 3 | 2.5 |
| | 100 | 2 | 2 | 2.5 | 2.5 | 2.5 | 2.5 | 3 | 2.5 |
| | 1000 | 2.5 | 2.5 | 3 | 3 | 3 | 3 | 3 | 3 |
| | 5000 | 2.5 | 2.5 | 2.5 | 3 | 3 | 3 | 3 | 3 |
| | 10000 | 2.5 | 2.5 | 3 | 3 | 3 | 3 | 3.5 | 3 |

| | | Citric acid (ppm) | | | | | | | |
|---|---|---|---|---|---|---|---|---|---|
| | | 500 | | 1000 | | 5000 | | 8000 | |
| Panelist | | A | B | A | B | A | B | A | B |
| EG (ppm) | 0 | 2 | 2 | 2 | 2 | 2 | 2 | 2 | 2 |
| | 2.5 | 2.5 | 3 | 2.5 | 2.5 | 2.5 | 2.5 | 2.5 | 2.5 |
| | 5 | 2.5 | 3 | 2.5 | 3 | 2.5 | 2.5 | 2.5 | 2.5 |
| | 10 | 3 | 3 | 2.5 | 3 | 2.5 | 2.5 | 2.5 | 2.5 |
| | 100 | 3 | 3 | 3 | 3 | 2.5 | 3 | 2.5 | 2.5 |
| | 1000 | 3.5 | 3.5 | 3 | 3.5 | 3 | 3.5 | 2.5 | 2.5 |
| | 5000 | 3.5 | 3.5 | 3 | 3.5 | 3 | 3.5 | 2.5 | 2.5 |
| | 10000 | 3.5 | 4 | 3 | 4 | 3 | 3.5 | 3 | 3 |

**[Table 3]**

| | | Citric acid (ppm) | | | | | | | |
|---|---|---|---|---|---|---|---|---|---|
| | | 0 | 10 | 50 | 100 | 500 | 1000 | 5000 | 8000 |
| EG (ppm) | 0 | 2.00 | 2.00 | 2.00 | 2.00 | 2.00 | 2.00 | 2.00 | 2.00 |
| | 2.5 | 2.00 | 2.00 | 2.50 | 2.50 | 2.75 | 2.50 | 2.50 | 2.50 |
| | 5 | 2.00 | 2.00 | 2.50 | 2.75 | 2.75 | 2.75 | 2.50 | 2.50 |
| | 10 | 2.00 | 2.25 | 2.50 | 2.75 | 3.00 | 2.75 | 2.50 | 2.50 |
| | 100 | 2.00 | 2.50 | 2.50 | 2.75 | 3.00 | 3.00 | 2.75 | 2.50 |
| | 1000 | 2.50 | 3.00 | 3.00 | 3.00 | 3.50 | 3.25 | 3.25 | 2.50 |
| | 5000 | 2.50 | 2.75 | 3.00 | 3.00 | 3.50 | 3.25 | 3.25 | 2.50 |
| | 10000 | 2.50 | 3.00 | 3.00 | 3.25 | 3.75 | 3.50 | 3.25 | 3.00 |

**[Table 4]**

| Degree of improvement | | Citric acid (ppm) | | | | | | | |
|---|---|---|---|---|---|---|---|---|---|
| | | 0 | 10 | 50 | 100 | 500 | 1000 | 5000 | 8000 |
| EG (ppm) | 0 | - | 0.00 | 0.00 | 0.00 | 0.00 | 0.00 | 0.00 | 0.00 |
| | 2.5 | 0.00 | 0.00 | 0.50 | 0.50 | 0.75 | 0.50 | 0.50 | 0.50 |
| | 5 | 0.00 | 0.00 | 0.50 | 0.75 | 0.75 | 0.75 | 0.50 | 0.50 |
| | 10 | 0.00 | 0.25 | 0.50 | 0.75 | 1.00 | 0.75 | 0.50 | 0.50 |
| | 100 | 0.00 | 0.50 | 0.50 | 0.75 | 1.00 | 1.00 | 0.75 | 0.50 |
| | 1000 | 0.50 | 1.00 | 1.00 | 1.00 | 1.50 | 1.25 | 1.25 | 0.50 |
| | 5000 | 0.50 | 0.75 | 1.00 | 1.00 | 1.50 | 1.25 | 1.25 | 0.50 |
| | 10000 | 0.50 | 1.00 | 1.00 | 1.25 | 1.75 | 1.50 | 1.25 | 1.00 |

When the carbonated beverage had a citric acid concentration of 50 ppm or more and a concentration ratio of ethyl glycoside to citric acid (ethyl glycoside/citric acid) of 0.0003 to 200, bubble particles of the carbon dioxide gas felt fine in the mouth, as compared to bubble particles of the carbonated beverage not containing ethyl glycoside or citric acid (the carbonated beverage A) and bubble particles of the carbonated beverage not containing ethyl glycoside. The amount of bubble particles of the carbon dioxide gas also felt large in the mouth. This improved the cooling sensation (refreshing stimulating sensation).

### (Preparation of fruit juices)

Fruit juices were prepared by squeezing lemons, oranges, and grapes (Kyoho grapes). The citric acid equivalent total concentration of the at least one of citric acid or its salt of the resulting fruit juice was measured by the following method using high performance liquid chromatography (HPLC).

### (Measurement of citric acid and/or its salt)

A set of HPLC available from Shimadzu Corporation was used for high performance liquid chromatography analysis.
HPLC analysis conditions
Column: SHIM-PACK SCR-102H (8 mmL ID, 300 mL) (SHIMADZU GLC Ltd.)
Detector: Conductivity Detector CDD-6A
Eluent:
   Solvent A: Aqueous p-toluenesulfonic acid solution (0.951 g of p-toluenesulfonic acid/1 L of water)
   Solvent B: Tris buffer containing p-toluenesulfonic acid
Flow rate: 0.8 mL/min (for both solvent A and solvent B) Analysis time: 38 min
Column oven temperature: 40°C

The results were quantified using an absolute calibration curve.

Solvent A (aqueous p-toluenesulfonic acid solution) was prepared by dissolving p-toluenesulfonic acid (0.951 g) in water (1 L).

Solvent B (Tris buffer containing p-toluenesulfonic acid) was prepared by dissolving p-toluenesulfonic acid (0.951 g), bis-Tris (4.185 g), and EDTA (0.029 g) in water (1 L).

The citric acid equivalent total concentration of the at least one of citric acid or its salt was as follows: 62607 ppm in the lemon juice; 35549 ppm in the orange juice; and 5656 ppm in the grape juice. These fruit juices were used in examples described later.

### (Example 2)

A lemon juice (1 mL) was added to the carbonated water A (199 mL) to prepare a lemon juice-containing carbonated beverage (citric acid equivalent total concentration of citric acid and/or its salt: 313 ppm). EG (500 µg) was added to the lemon juice-containing carbonated beverage (50 mL) to prepare a sample having an EG concentration of 10 ppm. This sample had a ratio ((B)/(A)) of the ethyl glycoside (EG) concentration (B) to the citric acid equivalent total concentration (A) of the at least one of citric acid or its salt of 0.032.

The above sample and the lemon juice-containing carbonated beverage not containing EG (EG concentration: 0 ppm) were evaluated in terms of cooling sensation by the same method as in Example 1. Table 5 shows the evaluation results.

**[Table 5]**

| Lemon juice-containing carbonated beverage | | Panelist A | Panelist B | Average |
|---|---|---|---|---|
| EG (ppm) | 0 | 2 | 2 | 2.00 |
| | 10 | 2.5 | 3 | 2.75 |

### (Example 3)

An orange juice (2 mL) was added to the carbonated water A (198 mL) to prepare an orange juice-containing carbonated beverage (citric acid equivalent total concentration of citric acid and/or its salt: 355 ppm). EG (500 µg) was added to the orange juice-containing carbonated beverage (50 mL) to prepare a sample having an EG concentration of 10 ppm. This sample had a ratio ((B)/(A)) of the EG concentration (B) to the citric acid equivalent total concentration (A) of the at least one of citric acid or its salt of 0.028.

The above sample and the orange juice-containing carbonated beverage not containing EG (EG concentration: 0 ppm) were evaluated in terms of cooling sensation by the same method as in Example 1. Table 6 shows the evaluation results.

**[Table 6]**

| Orange juice-containing carbonated beverage | | Panelist A | Panelist B | Average |
|---|---|---|---|---|
| EG (ppm) | 0 | 2 | 2 | 2.00 |
| | 10 | 2.5 | 3.5 | 3.25 |

### (Example 4)

A grape juice (10 mL) was added to the carbonated water A (190 mL) to prepare a grape juice-containing carbonated beverage (citric acid equivalent total concentration of citric acid and/or its salt: 283 ppm). EG (500 µg) was added to the grape juice-containing carbonated beverage (50 mL) to prepare a sample having an EG concentration of 10 ppm. This sample had a ratio ((B)/(A)) of the EG concentration (B) to the citric acid equivalent total concentration (A) of the at least one of citric acid or its salt of 0.035.

The above sample and the grape juice-containing carbonated beverage not containing EG (EG concentration: 0 ppm) were evaluated in terms of cooling sensation by the same method as in Example 1. Table 7 shows the evaluation results.

**[Table 7]**

| Grape juice-containing carbonated beverage | | Panelist A | Panelist B | Average |
|---|---|---|---|---|
| EG (ppm) | 0 | 1.5 | 1.5 | 1.50 |
| | 10 | 2 | 2 | 2 |

In each of Examples 2 to 4, bubbles particles of the carbon dioxide gas in the carbonated beverage containing ethyl glycoside felt fine in the mouth, as compared to bubbles particles of the carbonated beverage not containing ethyl glycoside. The amount of bubble particles of the carbon dioxide gas in the carbonated beverages containing ethyl glycoside felt large, which improved the cooling sensation (refreshing stimulating sensation). In Examples 2 to 4, the cooling sensation was improved by the ethyl glycoside, but the aroma was not affected.

## Claims

1. A carbonated beverage comprising:
ethyl glycoside; and
at least one of citric acid or its salt,
wherein a citric acid equivalent total concentration of the at least one of citric acid or its salt is 50 ppm or more,
a ratio (B)/(A) of an ethyl glycoside concentration (B) to the citric acid equivalent total concentration (A) of the at least one of citric acid or its salt is 0.0003 to 200, and
an ethanol concentration is less than 0.5 v/v%.

2. The carbonated beverage according to claim 1,
wherein the citric acid equivalent total concentration of the at least one of citric acid or its salt is 50 to 8000 ppm.

3. The carbonated beverage according to claim 1 or 2,
wherein the ethyl glycoside concentration is 2.5 to 10000 ppm.

4. The carbonated beverage according to any one of claims 1 to 3,
wherein the ethyl glycoside is ethyl glucoside.

5. A method of producing a carbonated beverage having an ethanol concentration of less than 0.5 v/v%, comprising:
adding ethyl glycoside and at least one of citric acid or its salt to a beverage such that, in the beverage, a citric acid equivalent total concentration of the at least one of citric acid or its salt is 50 ppm or more, and a ratio (B)/(A) of an ethyl glycoside concentration (B) to the citric acid equivalent total concentration (A) of the at least one of citric acid or its salt is 0.0003 to 200.

6. A method of improving cooling sensation of a carbonated beverage having an ethanol concentration of less than 0.5 v/v%, comprising:
adding ethyl glycoside and at least one of citric acid or its salt to a beverage such that, in the beverage, a citric acid equivalent total concentration of the at least one of citric acid or its salt is 50 ppm or more, and a ratio (B)/(A) of an ethyl glycoside concentration (B) to the citric acid equivalent total concentration (A) of the at least one of citric acid or its salt is 0.0003 to 200.
